(19) Europäisches Patentamt

European Patent Office

Office européen des brevets

(11) **EP 1 022 499 A1**

(12) **DEMANDE DE BREVET EUROPEEN**

(43) Date de publication:
26.07.2000 Bulletin 2000/30

(51) Int. Cl.⁷: **F16K 15/04**, F16F 9/516

(21) Numéro de dépôt: 00400072.5

(22) Date de dépôt: **13.01.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **25.01.1999 FR 9900777**

(71) Demandeur: **HUTCHINSON**
**75008 Paris (FR)**

(72) Inventeurs:
• **Rointru, Claude**
**37130 Mazieres de Touraine (FR)**
• **Defeings, Patrice**
**37340 Ambillou (FR)**

(74) Mandataire:
**Jacquard, Philippe Jean-Luc et al**
**CABINET ORES,**
**6, Avenue de Messine**
**75008 Paris (FR)**

(54) **Clapet à faible inertie et tendeur comportant un tel clapet.**

(57) La présente invention se rapporte principalement à un clapet rapide, c'est-à-dire à un clapet réagissant de manière quasi instantanée aux changements de flux d'un fluide et à un tendeur comportant un tel clapet.

Ces buts sont atteints par un clapet (3) selon la présente invention comportant une pluralité de canaux d'interconnexion (5), avantageusement parallèles, chaque canal ayant une pièce mobile (9,9') prisonnière d'une cage de réception de la pièce, susceptible d'être appliquée sur un siège (15) par le fluide du fluide à contrôler.

La présente invention s'applique principalement à l'industrie automobile, pour la réalisation des tendeurs (23) pour courroies de transmission du mouvement d'un vilebrequin aux accessoires tels que pompe à eau, alternateur, système d'assistance de direction ou analogue, ainsi qu'aux courroies de distribution d'un moteur thermique à combustion interne.

Fig. 2

# Description

La présente invention se rapporte principalement à un clapet à faible inertie, c'est-à-dire à un clapet réagissant de manière quasi instantanée aux changements de flux d'un fluide et à un tendeur comportant un tel clapet.

Il est connu de mettre en oeuvre des clapets anti-retour, notamment des clapets à bille, pour obtenir un flux unidirectionnel ou, dans la mesure où on ménage des fuites, deux flux dans deux directions opposées ayant des débits différents. Notamment, des clapets anti-retour à billes confèrent aux tendeurs de courroies à amortissement par écoulement des fluides, mis en oeuvre notamment pour le tensionnement de courroies de moteurs automobiles, un comportement asymétrique lors du rapprochement et de l'éloignement relatifs des extrémités de ces tendeurs.

La Demanderesse a découvert que les tendeurs de ce type amortissent de manière imparfaite les vibrations haute fréquence des courroies, notamment les vibrations situées dans des fréquences supérieures à 150 Hz.

C'est par conséquent un but de la présente invention d'offrir un clapet à réactions rapides.

C'est également un but de la présente invention d'offrir un clapet particulièrement fiable.

C'est aussi un but de la présente invention d'offrir un tendeur susceptible d'amortir les vibrations dans une courroie, notamment pour des fréquences comprises entre 0 et 600 Hz.

Ces buts sont atteints par un clapet selon la présente invention comportant une pluralité de canaux d'interconnexion, avantageusement parallèles, chaque canal ayant une pièce mobile d'obturation prisonnière d'une cage de réception de la pièce, susceptible d'être appliquée sur un siège par le flux du fluide à contrôler.

Avantageusement, les pièces mobiles sont des billes.

Avantageusement, on réduit la masse de chaque bille en utilisant des billes creuses et/ou en mettant en oeuvre des matériaux de haute résistance et de faible densité.

En variante, les pièces mobiles d'obturation sont des éléments flexibles ou articulés d'une plaque.

La présente invention a principalement pour objet un clapet comportant des moyens d'obturation d'un canal de passage du fluide par une pièce d'obturation mobile, caractérisé en ce qu'il comporte une pluralité de canaux chacun muni d'une pièce d'obturation entraînée par le flux de fluide à contrôler.

La présente invention a aussi pour objet un clapet, caractérisé en ce qu'il comporte une pluralité de canaux identiques.

La présente invention a également pour objet un clapet, caractérisé en ce que les canaux sont parallèles.

La présente invention a aussi pour objet un clapet, caractérisé en ce qu'il comporte un corps cylindrique, et en ce que les canaux sont régulièrement répartis angulairement et sont parallèles à un axe du corps cylindrique du clapet.

La présente invention a également pour objet un clapet, caractérisé en ce que les pièces d'obturation sont des billes.

La présente invention a aussi pour objet un clapet, caractérisé en ce que les billes ont un rayon compris entre 1,5 et 2 mm.

La présente invention a également pour objet un clapet, caractérisé en ce que les moyens d'obturation sont formés par les extrémités d'une plaque.

La présente invention a aussi pour objet un clapet, caractérisé en ce que les pièces d'obturation sont réalisées en matériau composite, notamment en fibre de carbone.

La présente invention a également pour objet un tendeur pour courroie comportant des moyens d'amortissement par fluide comprenant une chambre haute pression et une chambre basse pression reliées par un clapet.

La présente invention a aussi pour objet un tendeur pour courroie, caractérisé en ce que les chambres haute pression et basse pression sont superposées, et en ce que le clapet est monté sur un piston du tendeur.

La présente invention sera mieux comprise au moyen de la description ci-après et des figures annexées données comme des exemples non limitatifs et sur lesquelles :

- la figure 1 est une vue en coupe d'une bille sphérique pleine ;
- la figure 2 est une vue en coupe d'un exemple de réalisation d'un clapet selon la présente invention ;
- la figure 3 est une vue d'en haut du clapet de la figure 2 ;
- la figure 4 est une vue en coupe de l'exemple préféré de réalisation d'un tendeur selon la présente invention ;
- la figure 5 est une vue en coupe d'une bille creuse ;
- la figure 6 est une vue en coupe d'une variante de réalisation du clapet selon la présente invention.

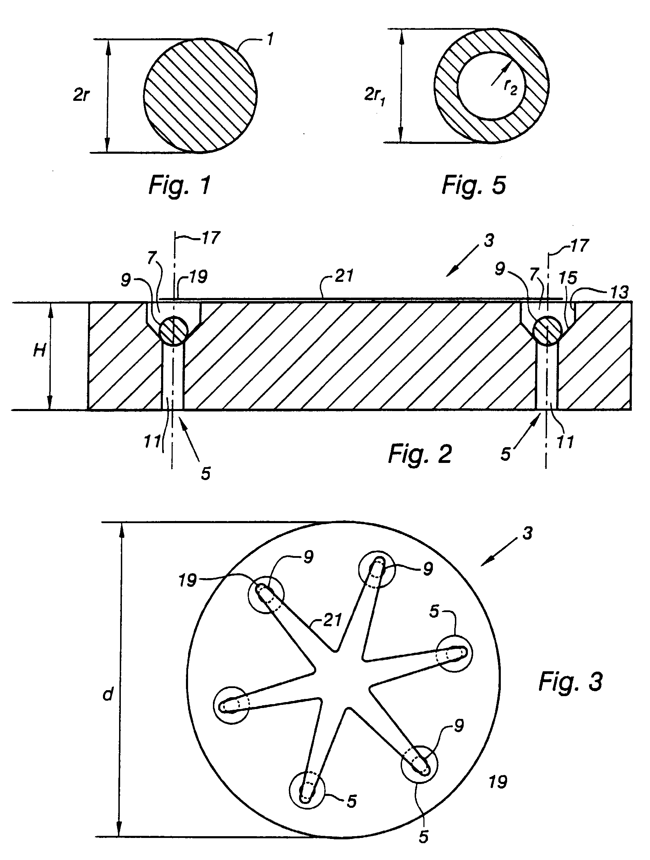

Sur les figures 1 à 6, on a utilisé les mêmes références pour désigner les mêmes éléments.

Sur la figure 1, on peut voir une sphère 1 de rayon r et de densité uniforme D. La masse M d'une telle sphère est égale au produit de son volume V par la densité D. La section de passage, c'est-à-dire la surface susceptible d'être obstruée par une bille sphérique est inférieure à la surface du périmètre de la bille égale à $\pi r^2$.

La masse M détermine l'inertie avec laquelle la bille va réagir à un changement de flux ou de pression du fluide.

Ainsi, le rapport A entre la masse M de la bille et sa section S est donné par la formule :

$$A = \frac{M}{S} = \frac{D \, 4 \, \pi r^3}{3 \, \pi r^2} = D \, 4/3 \, r$$

Il en résulte donc que, pour des billes sphériques le rapport A est proportionnel à r.

La Demanderesse en a déduit que la mise en oeuvre d'un clapet dans lequel une bille unique est remplacée par une pluralité de billes plus petites permet, tout en offrant une même section de passage, ou une section de passage induisant la même perte de charge, de diminuer l'inertie de la masse mobile du clapet. De plus, si la distance entre billes adjacentes disposées dans des canaux parallèles est suffisante, l'inertie de chaque canal n'est que faiblement affectée par la présence des billes des autres canaux du clapet.

Sur les figures 2 et 3, on peut voir l'exemple préféré de réalisation d'un clapet 3 selon la présente invention comportant six canaux 5 parallèles, chacun comprenant une cage 7 de réception d'une masse d'obturation 9 avantageusement de forme sphérique (bille), connectée à une conduite 11.

Dans l'exemple non limitatif illustré, la conduite 11 est une conduite cylindrique alors que la cage comporte un tronçon 13 cylindrique raccordé à un tronçon 15 tronconique formant le siège pour la masse d'obturation 9.

Avantageusement, les tronçons 13 et 15 ainsi que la conduite 11 d'un même canal 5 sont alignées selon un même axe 17. La cage 7 de chaque clapet 5 est partiellement fermée à son extrémité opposée à celle raccordée à la conduite 11 par une extrémité 19 d'une plaquette 21 par exemple en forme d'étoile. L'extrémité 19 de la plaquette 21 recouvre partiellement l'ouverture de la cage 7, de manière à empêcher la bille 9 de sortir de la cage, sans perturber notablement le flux de fluide à travers le clapet. Le clapet 3 selon la présente invention a une forme sensiblement cylindrique ayant un diamètre d, par exemple compris entre 10 et 30, de préférence entre 16 et 20, de manière encore préférée compris entre 16 et 19, une hauteur H comprise entre 6 et 20, le nombre de canaux est par exemple compris entre 2 et 12, de préférence entre 2 et 8, de manière préférée entre 3 et 6. Pour limiter les pertes de charge, la hauteur H est faible pour des canalisations 11 de faible diamètre. Le tronçon 13 a un diamètre compris entre 1 et 2 fois le diamètre de la bille, de manière préférée entre 1,5 et 1,8 fois le diamètre de la bille.

La canalisation 11 a un diamètre compris entre 0,6 et 0,8 fois le diamètre de la bille.

La bille 9 a un diamètre compris entre 1 et 4, de manière préférée entre 1,5 et 2 mm.

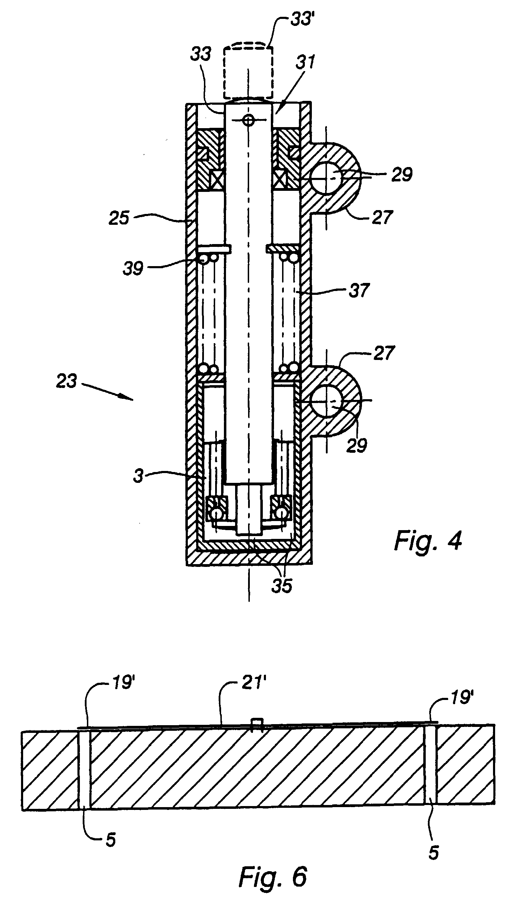

Sur la figure 4, on peut voir l'exemple préféré de réalisation d'un tendeur 23 selon la présente invention comportant un corps 25 sensiblement cylindrique sur lequel sont ménagés des moyens 27 de fixation sur un support, par exemple sur le carter d'un moteur thermique d'un véhicule automobile ou sur une platine montée à rotation sur un tel carter. Les moyens 27 de fixation comportent par exemple des oeillets avec passage 29 pour boulons (non représentés). Un piston 31 comportant une tige 33 est monté à translation dans le corps 25, de manière à délimiter une chambre haute pression 35 et une chambre basse pression 37 dont les volumes varient lors du déplacement axial du piston. Le tendeur 23 selon la présente invention est muni des moyens 39 de rappel élastique du piston vers la position haute, dans laquelle la tige 33 est illustrée en 33'.

Les chambres basse pression 37 et haute pression 35 sont reliées par un clapet 3 selon la présente invention comportant par exemple six canaux 5 régulièrement répartis.

L'extrémité de la tige 33 peut recevoir une chape comprenant un galet d'appui sur une courroie, notamment une courroie de distribution d'un moteur thermique d'un véhicule automobile (non illustrés). Lorsque le piston 31 descend dans le corps 25 du tendeur 23, les billes 9 sont plaquées sur leurs sièges et l'écoulement s'effectue uniquement par des fuites de fluide avec très forte perte de charge assurant un excellent amortissement. Au contraire, lorsque le piston 31 remonte dans le corps 25 du tendeur 23, les billes 9 ne sont plus appliquées sur leurs sièges 15 et permettent un écoulement rapide sans amortissement notable, de manière à rattraper de manière quasi instantanée le jeu dans la courroie (non représentée).

La mise en oeuvre du clapet selon la présente invention dans le tendeur 23 permet de mieux suivre les variations rapides de la tension de la courroie et notamment d'amortir des vibrations. Le tendeur de la figure 4 comportant six canaux avec des billes 9 ayant un diamètre de entre 1,5 mm et 2,5 mm, permet d'amortir complètement des vibrations dont la fréquence atteint 600 Hz. Des fréquences plus élevées peuvent être atteintes en remplaçant les billes 9 en acier par des billes d'un matériau de faible densité, notamment en fibre de carbone et/ou en utilisant des billes creuses telles qu'illustrées sur la figure 5. La bille de la figure 5 de rayon $r_1$ comporte une cavité interne ayant un rayon $r_2$ inférieur à $r_1$.

Dans l'exemple de clapet selon l'invention illustrée sur la figure 6, les pièces mobiles d'obturation des canaux du clapet sont constituées par les extrémités 19' d'une plaque 21' fixée sur le corps du clapet et recouvrant complètement les entrées des canalisations 11' avantageusement cylindrique. En variante, chaque élément d'obturation correspond à une plaque 21' individuelle. Avantageusement, la plaque 21' est extrêmement souple de manière à exercer un couple de rappel vers la position fermée du clapet extrêmement modéré. En variante, les extrémités 19' sont articulées sur la plaque 21'.

La mise en oeuvre d'autres moyens d'obturation des canaux multiples du clapet selon la présente invention ne sortent pas du cadre de la présente invention. Toutefois, il est avantageux d'utiliser des moyens d'obturation sans force de rappel élastique vers la position fermée du clapet ou avec des forces extrêmement modérées de manière à éviter l'apparition de fréquences de résonance aux fréquences de travail du clapet.

La présente invention s'applique principalement à l'industrie automobile, pour la réalisation des tendeurs pour courroies de transmission du mouvement d'un vilebrequin aux accessoires tels que pompe à eau, alternateur, système d'assistance de direction 'ou analogue, ainsi qu'aux courroies de distribution d'un moteur thermique à combustion interne.

**Revendications**

1.  Tendeur pour courroie comportant des moyens d'amortissement par fluide comprenant une chambre haute pression (35) et une chambre basse pression (37) reliées par un clapet (3), caractérisé en ce que ledit clapet comporte une pluralité de canaux (5) dont chacun est muni d'un élément d'obturation mobile (9, 19') entraîné par le flux de fluide à contrôler.

2.  Tendeur selon la revendication 1, caractérisé en ce que le clapet comporte une pluralité de canaux (5) identiques.

3.  Tendeur selon la revendication 1 ou 2, caractérisé en ce que les canaux (5) sont parallèles.

4.  Tendeur selon l'une quelconque des revendications précédentes, caractérisé en ce que le clapet comporte un corps cylindrique, et en ce que les canaux (5) sont régulièrement répartis angulairement et sont parallèles à un axe du corps cylindrique du clapet.

5.  Tendeur selon l'une quelconque des revendications précédentes, caractérisé en ce que les éléments d'obturation mobiles (9) sont des billes.

6.  Tendeur selon la revendication 5, caractérisé en ce que les billes ont un rayon compris entre 1,5 et 2 mm.

7.  Tendeur selon la revendication 1, 2, 3 ou 4, caractérisé en ce que les éléments d'obturation (19') sont formés par les extrémités d'une plaque (21').

8.  Tendeur selon l'une quelconque des revendications précédentes, caractérisé en ce que les éléments d'obturation (9) sont réalisées en matériau composite, notamment en fibre de carbone.

9.  Tendeur pour courroie selon une des revendications précédentes, caractérisé en ce que les chambres haute pression (35) et basse pression (37) sont superposées, et en ce que le clapet (3) est monté sur un piston (31) du tendeur.

Fig. 1

Fig. 5

Fig. 2

Fig. 3

Fig. 4

Fig. 6

EP 1 022 499 A1

**Office européen des brevets**

**RAPPORT DE RECHERCHE EUROPEENNE**

Numéro de la demande

EP 00 40 0072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 3 812 938 A (BEETS R ET AL) 28 mai 1974 (1974-05-28) * colonne 4, ligne 35 - ligne 57; figures 1,3,5 * | 1-5,9 | F16K15/04 F16F9/516 |
| Y | GB 23018 A A.D. 1910 (LIEBERT EMIL H) * page 1, ligne 28 - ligne 34; figures 1,2 * | 1-5,9 | |
| Y | US 2 891 571 A (SPARKS VAN J.) 23 juin 1959 (1959-06-23) * colonne 2, ligne 9 - ligne 52; figures * | 1-5,9 | |
| A | DE 62 766 C (GENTY LUCIEN) * page 1, colonne de droite, alinéa 4 - page 2, colonne de gauche, alinéa 2; figures 1,2 * | 1-5 | |

| | | | DOMAINES TECHNIQUES RECHERCHES (Int.Cl.7) |
|---|---|---|---|
| | | | F16K F16F |

Le présent rapport a été établi pour toutes les revendications

| Lieu de la recherche | Date d'achèvement de la recherche | Examinateur |
|---|---|---|
| LA HAYE | 23 mai 2000 | Christensen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## ANNEXE AU RAPPORT DE RECHERCHE EUROPEENNE
## RELATIF A LA DEMANDE DE BREVET EUROPEEN NO.

EP 00 40 0072

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

23-05-2000

| Document brevet cité au rapport de recherche | | Date de publication | Membre(s) de la famille de brevet(s) | | Date de publication |
|---|---|---|---|---|---|
| US 3812938 | A | 28-05-1974 | AU | 449644 B | 20-06-1974 |
| | | | AU | 5045472 A | 05-04-1973 |
| | | | US | 3827539 A | 06-08-1974 |
| | | | US | 3830347 A | 20-08-1974 |
| | | | US | 3771629 A | 13-11-1973 |
| GB K23018 | A | | AUCUN | | |
| US 2891571 | A | 23-06-1959 | AUCUN | | |
| DE 62766 | C | | AUCUN | | |

EPO FORM P0460

Pour tout renseignement concernant cette annexe : voir Journal Officiel de l'Office européen des brevets, No.12/82